# EUROPÄISCHE PATENTSCHRIFT

(11) **EP 0 633 698 B1**
(45) Veröffentlichungstag und Bekanntmachung des Hinweises auf die Patenterteilung: **08.09.1999**
(21) Anmeldenummer: 94110415.0
(22) Anmeldetag: 05.07.1994
(51) Int. Cl.: H04N 7/22, H04N 7/173

(54) **Kabelfernseh-Verteilnetz mit Abruf-Videosignal-Übertragung**
Cable television distribution network with video signal transmission on demand
Réseau de distribution de télévision par câble avec transmission de signal vidéo à la demande

(30) Priorität: 10.07.1993 DE 4323147
(43) Veröffentlichungstag der Anmeldung: 11.01.1995
(73) Patentinhaber: ALCATEL, 75008 Paris (FR)
(72) Erfinder: Heidemann, Rolf, Dr., D-71732 Tamm (DE); Krimmel, Heinz G., D-70469 Stuttgart (DE)
(74) Vertreter: Kugler, Hermann, Dipl.-Phys.

(56) Entgegenhaltungen:
- EP-A- 0 419 137
- US-A- 5 119 188
- IEEE INTERNATIONAL CONFERENCE ON COMMUNICATIONS '93, Bd. 2, 23.Mai 1993 - 26.Mai 1993 GENEVA, SWITZERLAND, Seiten 715-721, XP 000371179 LEUNG ET AL. 'A MODULAR MULTIRATE VIDEO SWITCH - DESIGN AND DIMENSIONING'
- PATENT ABSTRACTS OF JAPAN vol. 010 no. 016 (E-375) ,22.Januar 1986 & JP-A-60 177781 (FUJITSU KK;OTHERS: 01) 11.September 1985,
- 18TH INTERNATIONAL TELEVISION SYMPOSIUM AND TECHNICAL EXHIBITION, 10.Juni 1993 - 15.Juni 1993 MONTREUX, SWITZERLAND, Seiten 831-842, XP 000379398 UTSUMI ET AL. 'OPTICAL FIBER BROADCASTING SYSTEM'
- JOURNAL OF LIGHTWAVE TECHNOLOGY, Bd. 11,Nr. 1, Januar 1993 NEW YORK, US, Seiten 60-68, XP 000377986 OLSHANSKY ET AL. 'SUBCARRIER MULTIPLEXED BROAD-BAND SERVICE NETWORK: A FLEXIBLE PLATFORM FOR BROAD-BAND SUBSCRIBER SERVICES'

## Beschreibung

Die Erfindung betrifft ein Kabelfernseh-Verteilnetz nach dem Oberbegriff des Patentanspruchs 1.

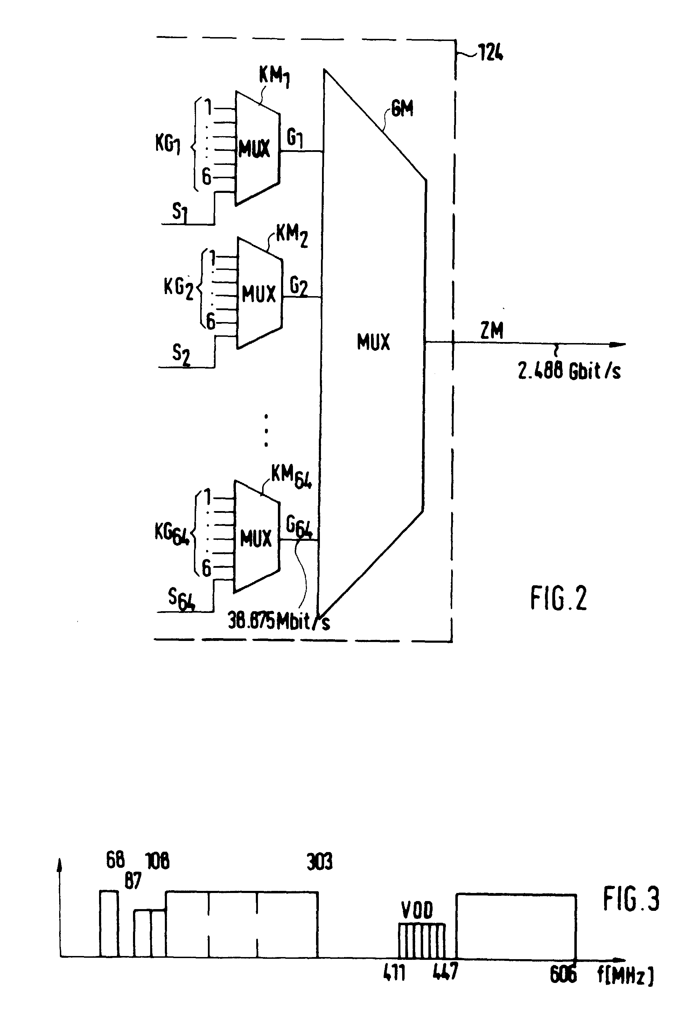

Ein Kabelfernseh-Verteilnetz mit den dort genannten Merkmalen ist bekannt aus SPIE Vol. 1817 Optical Communications (1992), S. 12-22, insbesondere aus den Figuren 3 und 6. Das Lichtwellenleiter-Verteilnetz ist dort ein ringförmiges Netz. Die teilnehmerindividuellen Videosignale, die zur Durchführung des Video-Abruf-Dienstes von der Zentrale (dort "Basic Unit" genannt) zu Teilnehmern des Kabelfernseh-Verteilnetzes übertragen werden müssen, werden dort als Analogsignale übertragen. Die Videosignale werden jeweils Unterträgern mit verschiedenen Frequenzen aufmoduliert, die modulierten Unterträger (37 Stück) werden zu einem Frequenzmultiplexsignal zusammengefaßt und dieses wird im Wellenlängenmultiplex mit den Kabelfernseh-Signalen zu optischen Netzabschlüssen (dort ONU's genannt) übertragen. In Tabelle 1 ist gezeigt, daß mehrere Wellenlängen verwendet werden müssen, um insgesamt 400 Kabelfernseh-Teilnehmern die Möglichkeit zu bieten, individuelle Videoprogramme abzurufen. Dies zeigt, daß zur Verwirklichung des Abruf-Video-Dienstes in Kabelfernseh-Verteilnetzen von z.B. über 4000 Teilnehmern, eine große Anzahl von Wellenlängen erforderlich ist. Daraus ergibt sich ein großer Aufwand für die in den optischen Netzabschlüssen vorhandenen Wellenlängen-Demultiplexer und somit hohe Kosten.

Ein weiterer Nachteil des bekannten Systems ist, daß in jedem optischen Netzabschluß für jeden an ihn angeschlossenen Teilnehmer eine Auswahl einer Teilmenge von Programmen aus der Gesamtheit der zum optischen Netzabschluß übertragenen Programme getroffen wird. Hierfür ist aber, wie Fig. 6 der genannten Veröffentlichung zeigt, erforderlich, daß das von einem optischen Netzabschluß zu einer Gruppe von an ihn angeschlossenen Teilnehmern führende elektrische Anschlußnetz sternförmig ist. Diese Einschränkung verträgt sich aber nicht mit der Struktur von Kabelfernseh-Verteilnetzen, die heutzutage diskutiert werden, z.B. das aus Elektrisches Nachrichtenwesen, 4. Quartal 1992, S. 58-65, insbesondere Bild 3, bekannte Kabelfernseh-Verteilnetz, da für diese Netze eine baumförmige Struktur statt einer sternförmigen Struktur des elektrischen Anschlußnetzes typisch ist.

Aus JOURNAL OF LIGHTWAVE TECHNOLOGY, VOL. 10, NO. 11, Nov. 1992, S.1760-1765 ist ein Kabelfernseh-Verteilnetz bekannt, das ebenfalls auf den Abruf-Video-Dienst eingerichtet ist. Die Videosignale (und zugehörigen Audiosignale) werden dort nicht als Analogsignale, sondern als Digitalsignale, die das Ergebnis einer komprimierenden Analog-Digital-Wandlung sind, übertragen. Als Multiplexverfahren zum Zusammenfassen der digitalen Videosignale wird dem Frequenzmultiplex der Vorzug vor dem Zeitmultiplex gegeben, weil die in Frage kommenden Zeitmultiplex-Verfahren entweder zu wenig flexibel oder in der absehbaren Zukunft noch zu teuer seien. Die optische Übertragung erfolgt mit demselben optischen Träger, mit dem auch die Kabelfernseh-Signale verteilt werden. Alle Videosignale werden an alle Teilnehmer übertragen, z.B. 200-400 Stück. Für die heutzutage diskutierten Kabelfernseh-Verteilnetze, bei denen das Lichtwellenleiter-Netz nicht bis zu den Teilnehmern geführt ist, sondern sich ein elektrisches Anschlußnetz zwischen optischen Netzabschlüssen des Lichtwellenleiter-Verteilnetzes und den Teilnehmern befindet, ist dies aber nicht möglich, weil das elektrische Anschlußnetz eine weitaus geringere Übertragungskapazität als das Lichtwellenleiter-Verteilnetz hat.

Aus IEEE INTERNATIONAL CONFERENCE ON COMMUNICATIONS '93, Bd.2, 23.Mai,1993 GENEVA, SWITZERLAND, Seiten 715-721, XP 000371179 LEUNG et al. 'A MODULAR MULTIRATE VIDEO SWITCH - DESIGN AND DIMENSIONING' ist ein Netz zum Übertragen von Kabelfernsehprogrammen, " broadcast videos" genannt, und teilnehmerindividuellen Programmen,"switched videos" genannt, von einer Verteilzentrale über lokale Verteil-Unternetze bis zu den Teilnehmern bekannt.In sämtlichen Netzabschnitten werden dabei sowohl die Kabelfernsehprogramme als auch die teilnehmerindividuellen Programme digital zu Zeitmultiplexsignalen zusammengefaßt.

Im Netzabschnitt zwischen der Verteilzentrale und den lokalen Verteil-Unternetzen werden mehrere solcher Zeitmultiplexsignale optisch im Wellenlängen-Multiplex übertragen. Aus diesen werden in den lokalen Verteil-Unternetzen neue Zeitmultiplexsignale gebildet, die jeweils wieder sowohl Kabelfernsehprogramme als auch teilnehmerindividuelle Programme enthalten und in nicht dargestellter Weise zu den Kunden übertragen werden.

Aus PATENT ABSTRACTS OF JAPAN, vol. 010, no. 16 (E-375), 22. Januar 1986 & JP-A-60 177781 (FUJITSU KK;OTHERS: 01), 11. September 1985, Zusammenfassung ist ein Kabelfernsehsystem mit Mitteln zur Frequenzsynchronisierung bekannt.

Es ist die Aufgabe der Erfindung, ein Kabelfernseh-Verteilnetz anzugeben, mit dem den Teilnehmern der Abruf-Video-Dienst angeboten werden kann, ohne daß es die geschilderten Nachteile der bekannten, den Abruf-Video-Dienst vorsehenden Netze hat, das insbesondere kostengünstig realisierbar ist und wenig Änderungen der Struktur von realistisch in Frage kommenden Kabelfernseh-Verteilnetzen erfordert.

Die Aufgabe wird wie im Patentanspruch 1 angegeben gelöst. Weiterbildungen ergeben sich aus den Unteransprüchen.

Nachstehend wird das wesentliche der Erfindung zunächst zusammengefaßt erläutert. Die Erfindung geht von der Annahme aus, daß ein beträchtlicher Teil von Kabelfernseh-Verteilnetzen, die in naher Zukunft eine Chance haben, irgendwo eingeführt zu werden, die Eigenschaft hat, daß das Lichtwellenleiter-Verteilnetz nicht bis zu den Häusern oder Wohnungen der Teilnehmer reicht, sondern am Straßenrand in optischen Netzabschlüssen endet und von dort durch ein elektrisches Anschußnetz bis zu den Teilnehmern weitergeführt ist. Diese erfindungsgemäß beibehaltene Netzstruktur ist z.B. in der oben genannten Veröffentlichung Elektrisches Nachrichtenwesen oder in einer anderen Veröffentlichung: Elektrisches Nachrichtenwesen, Band 65 Nr. 1, S. 44-51, Bild 2, dargestellt. Mit der Erfindung wurde nun der Übertragungskapazität einer solchen Netzstruktur Rechnung getragen und kostengünstige sowie leistungsfähige Zusatzeinrichtungen zur Bereitstellung des Abruf-Video-Dienstes angegeben.

Die wesentlichen Merkmale der Erfindung sind:
- Das neue Kabelfernseh-Verteilnetz hat die an sich bekannte Struktur, bei der ein Lichtwellenleiter-Verteilnetz zu optischen Netzabschlüssen führt und von jedem optischen Netzabschluß ein elektrisches Anschlußnetz zu der Gruppe der an ihn angeschlossenen Teilnehmer führt.
- Die bei Inanspruchnahme des Abruf-Video-Dienstes zur Gesamtheit der Teilnehmer des Netzes zu übertragenden Videosignale werden als digitale Signale übertragen, und zwar bis zu den Teilnehmern.
- Das Zusammenfassen der zu übertragenden teilnehmerindividuellen Videosignale in der Zentrale erfolgt im Zeitmultiplex.
- Das in der Zentrale gebildete Zeitmultiplexsignal wird im Wellenlängenmultiplex mit den Kabelfernseh-Signalen (mit einer einzigen weiteren Wellenlänge) bis zu den optischen Netzabschlüssen übertragen, also auf diese verteilt.
- Jeder optische Netzabschluß empfängt das die teilnehmerindividuellen Videosignale enthaltende optische Signal, setzt es in ein elektrisches Signal um und entnimmt daraus die Teilmenge derjeniger teilnehmerindividuellen Videosignale, die für Teilnehmer bestimmt sind, die an ihn angeschlossen sind.
- Nur diese Teilmenge von Signalen wird über das elektrische Anschlußnetz von dem jeweiligen optischen Netzabschluß zu den an diesen angeschlossenen Teilnehmern übertragen, also verteilt.
- Das Übertragungverfahren hierfür ist ein Frequenzmultiplex-Verfahren, bei dem die zu übertragenden digitalen Videosignale Unterträgern aufmoduliert, diese zu einem Frequenzmultiplexsignal zusammengefaßt werden und dieses dem Kabelfernseh-Signalgemisch hinzugefügt wird.
- Jeder Teilnehmer der an dem Abruf-Video-Dienst teilnimmt, selektiert und empfängt das für ihn bestimmte teilnehmerindividuelle Videosignal aus der Menge von teilnehmerindividuellen Videosignalen, die der gesamten Gruppe von Teilnehmern, die an einen optischen Netzabschluß angeschlossen sind, verteilt werden.

Die Erfindung wird nun anhand der Zeichnungen näher erläutert. Es zeigen:
- Fig. 1: die wesentlichen Merkmale des neuen Kabelfernseh-Verteilnetzes,
- Fig. 2: die Struktur des in Fig. 1 vorhandenen Zeitmultiplexers 124 und
- Fig. 3: einen Frequenzplan eines zukünftigen Kabelfernseh-Systems mit einem Bereich, in den erfindungsgemäß Signale des Abruf-Video-Dienstes einfügbar sind.

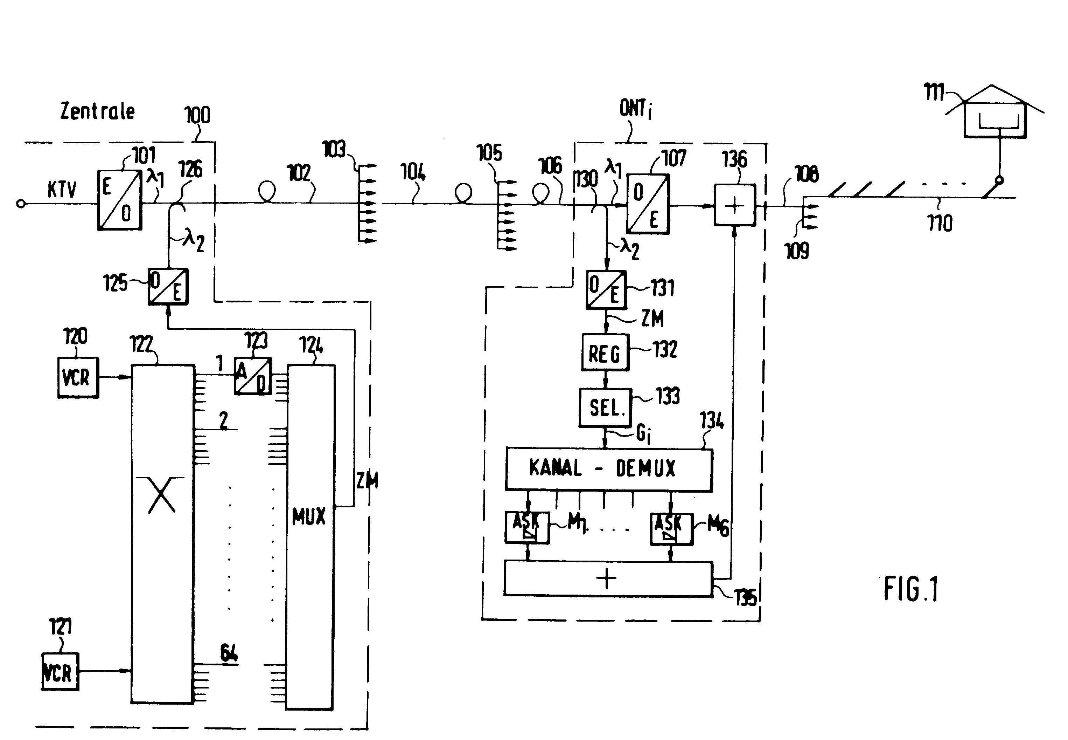

Die Fig. 1 zeigt in ihrem oberen Teil das im wesentlichen bekannte Kabelfernseh-Verteilnetz, wie es z.B. in der oben genannten Veröffentlichung Elektrisches Nachrichtenwesen, 4. Quartal 1992 in Bild 3 auf S. 60 gezeigt ist.

In einer Kabelfernseh-Zentrale 100 befindet sich ein Elektrisch-Optisch-Wandler 101, der das gesamte Signalgemisch zum Übertragen der Kabelfernseh-Programme und Tonprogramme, als KTV bezeichnet, in ein optisches Signal mit einer Wellenlänge λ₁ von 1550 nm umsetzt. Dieses optische Signal gelangt über ein Lichtwellenleiterverteilnetz, von dem ein Lichtwellenleiter 102, ein Strahlteiler 103, ein von diesem zu einem Strahlteiler 105 führender Lichtwellenleiter 104 und ein von dem Strahlteiler 104 zu einem optischen Netzabschluß (ONTᵢ) führender Lichtwellenleiter 106 gezeigt sind, zu einer Anzahl von optischen Netzabschlüssen, die gleich 64 ist, wenn die Strahlteiler einen Teilungsfaktor von 8 haben. Der gezeigte optische Netzabschluß (ONTᵢ) ist repräsentativ für alle 64, der Lichtwellenleiter 104 und der Strahlteiler 105 ist respräsentativ für jeweils acht ebensolche, und faseroptische Verstärker, die an verschiedenen Stellen des Lichtwellenleiter-Verteilnetzes vorhanden sind, sind in der Zeichnung weggelassen.

Für jeden optischen Netzabschluß wird im folgenden zur Vereinfachung die Abkürzung ONT (ONT = Optical Network Terminal) verwendet, bisweilen versehen mit dem Index i, wenn ausgedrückt werden soll, daß es sich um den ONT NR. i von 64 ONT's handelt. In jedem ONT endet der Lichtwellenleiter am Eingang eines Optisch-Elektrisch-Wandlers 107.

Von jedem ONT führt, wie es für den optischen Netzabschluß ONTᵢ gezeigt ist, ein elektrisches Anschlußnetz, praktisch ein Koaxialkabel-Netz, das sich wie gezeigt ebenfalls mehrfach verzweigt, zu Kabelfernseh-Anschlüssen bei Teilnehmern, von denen ein Teilnehmer 111 symbolisch durch ein Haus dargestellt ist. Das Anschlußnetz endet, bei jedem Teilnehmer an einem Kabelfernseh-Hausübergabepunkt. Im gezeigten Beispiel verzweigt sich das elektrische Anschlußnetz von einer Leitung 108 zunächst an einem Kabelverzweiger 109 auf vier Leitungen 110, von denen jede 8-fach verzweigt ist und sich beim Teilnehmer 111 nochmals auf zwei Leitungen verzweigt. Somit wird über das Lichtwellenleiter-Verteilnetz und die elektrischen Anschlußnetze das in der Zentrale bereitgestellte Kabelfernseh-Gemisch auf eine Vielzahl von Teilnehmern verteilt, in dem hier betrachteten Beispiel auf 4096 Teilnehmer.

Gemäß der Erfindung ist das beschriebene Kabelfernseh-Verteilnetz wie folgt erweitert, um den Teilnehmern die Möglichkeit zu bieten, von einem Abruf-Video-Dienst Gebrauch zu machen. In der Zentrale 100 befinden sich von dem Anbieter des Abruf-Video-Dienstes betriebene Speicher für Videofilme, z.B. eine Anzahl von Video-Kassettenrekordern (VCR), von den beispielsweise zwei gezeigt und mit 120 und 121 bezeichnet sind. Äußert ein Teilnehmer über eine Telefonverbindung oder einen im Kabelfernseh-Verteilnetz einzurichtenden Rückkanal den Wunsch, einen bestimmten Videofilm zu sehen, so wird dieser z.B. in einen der Video-Kassettenrekorder eingelegt und abgespielt. Die Ausgänge der Video-Kassettenrekorder sind mit Eingängen einer Vermittlungseinrichtung 122 verbunden, die entsprechend dem Wunsch des Teilnehmers so gesteuert wird, daß der Videofilm in einem Kanal in Richtung zu dem Teilnehmer übertragen wird, zu dem dieser Zugriff hat. Zu diesem Zweck sind die Ausgänge der Vermittlungseinrichtung 122 in Gruppen eingeteilt, wobei jede Gruppe genau einem der ONT's zugeordnet ist. Die zu einer Gruppe von Ausgängen gehörenden Ausgänge repräsentieren Kanäle, zu denen die Teilnehmer, die an den ONT, dem die Gruppe zugeordnet ist, Zugriff haben. Da in dem für das Verständnis der Erfindung betrachteten Beispiel die Zahl der ONT's gleich 64 ist, gibt es also, wie in der Zeichnung angedeutet, 64 Gruppen von Ausgängen der Vermittlungseinrichtung 122. Mit anderen Worten: Es gibt 64 Gruppen von Kanälen, in denen Videosignale zu Teilnehmern des Kabelfernseh-Verteilnetzes übertragbar sind.

Erfindungsgemäß erfolgt die Übertragung der Videosignale in den Kanälen digital. Die Bitfolgefrequenz zur Übertragung eines Videosignals in einem Kanal orientiert sich einerseits an den zur Verfügung stehenden Video-Codierungsverfahren und andererseits an dem Qualitätsanspruch, der an das Videosignal gestellt ist. Wie aus der eingangs genannten Veröffentlichung JOURNAL OF LIGHTWAVE TECHNOLOGY bekannt, gibt es Codierverfahren, die es erlauben, ein Videosignal mit guter Kabelfernseh-Qualität mit einer Bitfolgefrequenz von 6 Mbit/s zu übertragen.

Für das zur Erläuterung der Erfindung betrachtete Beispiel wird also davon ausgegangen, daß die Bitfolgefrequenz in einem Kanal 6 Mbit/s beträgt. Weiter wird davon ausgegangen, daß entsprechend der geschätzten Akzeptanz des Abruf-Video-Dienstes es ausreichen wird, wenn für eine Gruppe von an einen ONT angeschlossenen Teilnehmern sechs Kanäle zur Verfügung stehen. Hiervon ausgehend sind also im betrachteten Beispiel 64 Kanalgruppen vorhanden (für jeden optischen Netzabschluß eine) und jede Kanalgruppe hat sechs Kanäle mit einer Bitfolgefrequenz von 6 Mbit/s in jedem Kanal.

Im betrachteten Beispiel ist angenommen, daß die Videosignale in ihrer Quelle in analoger Form vorliegen und die Vermittlungseinrichtung ebenfalls in analoger Form durchlaufen. Daher befindet sich in jeder Ausgangsleitung der Vermittlungseinrichtung 122 ein Analog-Digital-Wandler 123, in anderen Worten: ein Videocodierer. Statt dessen ist es auch möglich, daß die Videosignale in dem Speicher, aus dem sie abrufbar sind, z.B. in einem magnetischen oder optischen Massenspeicher-Laufwerk, in komprimierter digitaler Form vorliegen, so daß die Analog-Digital-Wandler 123 nicht erforderlich sind.

Damit die zu übertragenden teilnehmerindividuellenen Videosignale nur von denjenigen Teilnehmern empfangbar sind, die sie bestellt haben und für sie bezahlen, werden sie mit einem teilnehmerindividuellen Schlüssel verschlüsselt. Die Verschlüsselungseinrichtung, die für jeden Kanal in der Zentrale erforderlich ist, ist in der Zeichnung weggelassen.

Ein Multiplexer 124 faßt die Videosignale aus den 64 Gruppen mit jeweils 6 Kanälen zu einem Zeitmultiplex-Signal zusammen, das an seinem mit ZM bezeichneten Ausgang erscheint (bisweilen werden Signale ebenso wie die sie führenden Leitungen bezeichnet), ein Elektrisch-Optisch-Wandler 125 setzt es in ein optisches Signal mit einer Wellenlänge λ₂ von z.B. 1530 nm um, und ein Wellenlängen-Multiplexer 126, der ein faseroptischer Koppler ist, koppelt das optische Signal mit der Wellenlänge λ₂ in denselben Lichtwellenleiter 102 ein, der auch das Gemisch der Kabelfernseh-Signale als optisches Signal mit der Wellenlänge λ₁ führt. Somit ist dafür gesorgt, daß die Gesamtheit von digitalen teilnehmerindividuellen Videosignalen als Zeitmultiplex-Signal im Wellenlängenmultiplex zusammen mit den Kabelfernseh-Signalen zu den ONT's verteilt wird. Die in dem Lichtwellenleiter-Verteilnetz vorhandenen faseroptischen Verstärker sind für beide Wellenlängen geeignet.

Im folgenden wird anhand von Fig. 2 die Struktur und Funktion des Multiplexers 124 aus Fig. 1 erläutert. Der Multiplexer 124 hat, wie bereits in Fig. 1 angedeutet, 64 Gruppen von Eingängen mit jeweils 6 Eingängen pro Gruppe. Er empfängt also Signale aus 64 Kanalgruppen, die in Fig. 2 mit KG₁bis KG₆₄ bezeichnet sind. Für jede dieser Kanalgruppen enthält der Multiplexer 124 einen Kanalmultiplexer, der die Videosignale aus den angeschlossenen sechs Kanälen zu einem Gruppen-Multiplexsignal zusammenfaßt und dabei in das entstehende Gruppen-Multiplexsignal Zusatzbits einfügt, die zur Kennung der Kanalgruppe und zur Synchronisation des das jeweilige Gruppen-Multiplexsignal wieder auflösenden Demultiplexers dienen. Die Kanalmultiplexer sind mit KM₁ bis KM₆₄ bezeichnet, die die Gruppen-Multiplexsignale führenden Ausgänge mit G₁ bis G₆₄ und die Eingänge der Kanalmultiplexer, in die aus nicht gezeigten Quellen die Zusatzbits eingegeben werden, sind mit S₁ bis S₆₄ bezeichnet.

Das von einem Kanalmultiplexer gebildete Gruppen-Multiplexsignal hat eine Bitfolgefrequenz von 38,875 MHz, wenn jeder der sechs Kanäle eine Bitfolgefrequenz von 6 Mbit/s und die Anzahl der eingefügten Zusatzbits so ist, daß sich aus der Netto-Bitfolgefrequenz von 36 Mbit/s und den Zusatzbits die Bitfolgefrequenz von 38,875 Mbit/s ergibt. Die Kanalmultiplexer können nach irgend einem beliebigen Zeitmultiplex-Verfahren arbeiten.

Statt der Bitfolgefrequenz von 6 Mbit/s pro Kanal können auch andere Bitfolgefrequenzen, z.B. 2 Mbit/s vorliegen, auch Kanäle mit unterschiedlichen Bitfolgefrequenzen innerhalb einer Kanalgruppe. Vorteilhaft können auch z.B. drei 2-Mbit/s-Kanäle zu einem Standard 6-Mbit/s-Kanal im Zeitmultiplex zusammengefaßt sein bis zur Decodierung beim Teilnehmer zusammengefaßt bleiben. Wesentlich für die Erfindung ist nur, daß ein Kanalmultiplexer diejenigen Videosignale zu einem Gruppen-Multiplexsignal im Zeitmultiplex zusammenfaßt, die für Teilnehmer bestimmt sind, die an denselben ONT angeschlossen sind. Jeder Kanalmultiplexer ist also genau einem der ONT's zugeordnet.

In der Zeitmultiplexeinrichtung 124 befindet sich auch ein Gruppen-Multiplexer, dessen Eingangssignale die Gruppen-Multiplexsignale G₁ bis G₆₄ sind, und der diese zu einem Zeitmultiplexsignal zusammenfaßt, das an seinem mit ZM bezeichneten Ausgang erscheint. Die Bitfolgefrequenz des entstehenden Zeitmultiplexsignals ist 2,488 Gbit/s (64x38,875 Mbit/s).

Das Zusammenfassen der 64 Eingangssignale zu einem Zeitmultiplexsignal im Gruppen-Multiplexer GM kann prinzipiell nach irgendeinem beliebigen Zeitmultiplexverfahren geschehen. Vorteilhaft für die Ausführung der Erfindung ist eine bitweise Verschachtelung der 64 digitalen Eingangssignale G₁ bhis G₆₄.

Dies bedeutet, daß jedes 64. Bit des vom Gruppenmultiplexer GM erzeugten Zeitmultiplexsignals ein Bit desselben Gruppen-Multiplexsignals ist z.B. ein Bit von G₁.

Um die Erfindung weiter zu beschreiben, wird nun wieder auf Fig. 1 Bezug genommen. Wie oben erwähnt, wird das die Gesamtheit aller Videosignale enthaltende Zeitmultiplexsignal ZM an alle 64 ONT's verteilt. Jeder der ONT's, von denen einer gezeigt und mit ONTᵢ bezeichnet ist, empfängt und verarbeitet das Zeitmultiplexsignal wie folgt:
Er enthält einen Wellenlängen-Demultiplexer 130, der im einfachsten Falle, wie zeichnerisch angedeutet, ein wellenlängenselektiver Faserschmelzkoppler ist. Dieser koppelt aus dem Wellenlängen-Multiplexsignal das optische Signal mit der Wellenlänge λ₂ aus und leitet es auf den Eingang eines Optisch-Elektrisch-Wandlers 131. An dessen Ausgang erscheint das sendeseitig erzeugte elektrische Zeitmultiplexsignal ZM. Es wird in einem Regenerator 132 regeneriert und gelangt dann auf einen Selektor 133. Dieser hat die Aufgabe, aus dem Zeitmultiplexsignal das Gruppen-Multiplexsignal zu entnehmen, das für die Gruppe der an den optischen Netzabschluß angeschlossenen Teilnehmer bestimmt ist, das also diejenigen teilnehmerindividuellen Videosignale enthält, die für diese Teilnehmer bestimmt sind.

Der Selektor 133 ist besonders einfach, wenn das Zeitmultiplexsignal, wie oben erwähnt, durch bitweise Verschachtelung der Gruppen-Multiplexsignale gebildet ist. Er tastet dann einfach das Zeitmultiplexsignal mit einem Takt ab, dessen Frequenz gleich einem 64stel des Bittakts des Zeitmultiplexsignals ZM (2,488 GHz) ist. Jedes 64ste Bit des Zeitmultiplexsignals gehört nämlich zu einem Gruppen-Multiplexsignal. Die Abtastung ergibt also einen Bitstrom, der ein Gruppen-Multiplexsignal ist.

Nun muß der Selektor 133 noch überprüfen, ob das durch die Abtastung entnommene Gruppen-Multiplexsignal das für den ONT bestimmte oder das für einen anderen ONT bestimmte ist. Zu diesem Zweck überprüft er die dem Gruppen-Multiplexsignal beigefügte Kennung. Stellt er fest, daß gemäß der Kennung das entnommene Gruppen-Multiplexsignal das für den ONT bestimmte ist, so behält er die Phase seines Abtasttaktes bei, findet er in dem Gruppen-Multiplexsignal die eigene Kennung nicht, so stellt er fest, daß dieses nicht für ihn bestimmt ist und verschiebt die Phase des Abtasttaktes um eine Bitperiode des Zeitmultiplexsignals, prüft wieder die Kennung solange, bis er bei irgend einer Abtastphase festgestellt hat, daß das abgetastete Gruppen-Multiplexsignal das für den betrachteten ONT bestimmte ist. Stattdessen ist es auch möglich, daß der Selektor aus der Differenz zwischen der gesuchten Kennung und der gefundenen Kennung die notwendige Phasenverschiebung errechnet und in einem einzigen Schritt durchführt.

Der Vorteil der sendeseitigen bitweisen Verschachtelung und der im optischen Netzabschluß stattfindenden einfachen Abtastung jedes 64sten Bits liegt darin, daß der Selektor mit einer Taktfrequenz arbeiten kann, die der niedrigen Bitfolgefrequenz von 38,875 Mbit/s angepaßt und nicht der um den Faktor 64 höheren Bitfolgefrequenz seines Eingangssignals.

Am Ausgang des Selektors 133 erscheint ein Gruppen-Multiplexsignal Gi das für den mit demselben Index seines Bezugszeichens versehenen optischen Netzabschluß ONTᵢ bestimmt ist. Es gelangt auf einen Kanal-Demultiplexer, der das Gegenstück zu einem der in Fig. 2 gezeigten Kanalmultiplexer KMᵢ ist und das Gruppen-Multiplexsignal in seine einzelnen Videosignale, im betrachteten Beispiel in die sechs Videosignale, zerlegt, die an seinen parallelen Ausgängen erscheinen.

Diese sechs Videosignale, die für Teilnehmer bestimmt sind, die an den ONTᵢ angeschlossen sind, werden nun wie folgt zu diesen übertragen. Der ONT enthält für jedes der sechs digitalen Videosignale einen Modulator, der das Videosignal einem Unterträger aufmoduliert. Die sechs Modulatoren sind mit M₁ bis M₆ bezeichnet. Die Modulation ist im einfachsten Fall eine Amplitudenumtastung des Unterträgers (engl. ASK=Amplitude Shift Keying).

Die in den Modulatoren verwendeten Unterträger liegen in einem Frequenzbereich, der nicht für den Dienst des Kabelfernsehens belegt oder reserviert ist, jedoch innerhalb des übertragbaren Frequenzbandes des elektrischen Anschlußnetzes liegt. Fig. 3 zeigt den Frequenzplan der heutzutage und wahrscheinlich auch in Zukunft für den Dienst des Kabelfernsehens über elektrische Koaxialkabel gültig ist. Die sechs Unterträger, denen jeweils eines der sechs Videosignale aufmoduliert wird, liegen in Abständen von 6 MHz im Frequenzbereich von 411 bis 447 MHz. Der Bereich ist in Fig. 3 mit VOD ("Video On DEMAND" = Abruf-Video-Dienst) bezeichnet. Die anderen rechteckförmigen Flächen bezeichnen Frequenzbänder des Kabelfernsehens, die entweder durch Tonprogramme oder Kabelfernseh-Programme belegt sind oder belegt werden sollen.

Fig. 1 zeigt einen Leistungsaddierer 135, der die sechs Unterträger zu einem Frequenzmultiplexsignal zusammenfaßt, das ein weiterer Leistungsaddierer 136 oder eine Frequenzweiche dem Kabelfernseh-Signalgemisch wiederum im Frequenzmultiplex hinzufügt, so daß schließlich vom Ausgang des Leistungsaddierers 136 ein Signalgemisch mit Frequenzen gemäß Fig. 3, das sowohl die analogen Kabelfernseh-Signale als auch die digitalen Abruf-Videosignale enthält, über das elektrische Anschlußnetz zu den an den betrachteten ONTᵢ angeschlossenen Teilnehmern verteilt wird.

Das Signalgemisch empfangen nun alle diese Teilnehmer, aber nur der Teilnehmer, der ein darin enthaltenes Abruf-Video-Signal angefordert hat, bekommt den Schlüssel mitgeteilt, mit dem er das angeforderte Signal entschlüsseln kann, damit es mit Hilfe seines Video-Decodierers decodiert werden kann. Stattdessen ist es auch möglich, daß ein Teilnehmer, der sich für den Abruf-Video-Dienst interessiert, sich bei dem Anbieter des Dienstes ein einziges Mal einen festen, ihm individuell zugeordneten, Schlüssel besorgt, der beispielsweise auf einer Magnetkarte gespeichert ist und mit Hilfe der in seinen Video-Decodierer eingesteckten Magnetkarte diesen in die Lage versetzt, das nur für ihn bestimmte Videosignal zu decodieren. Es ist dann nicht notwendig, einem Teilnehmer jedesmal den Schlüssel mitzuteilen, wenn an ihn ein Videosignal gesendet wird.

In jedem Falle hat das erfindungsgemäße System den Vorteil, daß jeder Teilnehmer Zugriff zu einem von sechs für den Dienst eingerichteten Kanälen hat, daß also die Kanalselektion erst beim Teilnehmer und nicht bereits im optischen Netzabschluß erfolgt. Dadurch ist es möglich, daß ein Teilnehmer gleichzeitig Videosignale auf mehreren Kanälen empfangen kann.

Die Anzahl von Kanälen für den Abruf-Video-Dienst, die einer Gruppe von an einen optischen Netzabschluß angeschlossenen Teilnehmern zur Verfügung stehen kann noch erhöht werden, wenn weitere Unterträger, die in durch den Dienst des Kabelfernsehens nicht belegten Frequenzbereichen liegen, verwendet werden, oder wenn die Codierung mit einer niedrigeren Bitfolgefrequenz erfolgt, so daß die Frequenzabstände zwischen den Unterträgern geringer sein können. Alternativ hierzu kann man auch die Abstände zwischen den Unterträgern beibehalten und die mit einer niedrigeren Bitfolgefrequenz codierten Signale zu einem Zeitmultiplexsignal mit z.B. 6Mbit/s zusammenfassen, das dann einem Unterträger aufmoduliert wird.

Nachstehend wird noch beschrieben, welche Vorgänge in dem erfindungsgemäßen System ablaufen, wenn ein Teilnehmer ein bestimmtes Videosignal, z.B. einen Videofilm, bestellt. Für solche Bestellungen kann entweder das Telefonnetz verwendet werden, oder ein Rückkanal, der zwischen den Teilnehmern und der Zentrale über das Kabelfernseh-Verteilnetz eingerichtet ist. Hat ein Teilnehmer, der zu einer Gruppe von Teilnehmern gehört, die an einem optischen Netzabschluß ONTᵢ angeschlossen sind, einen Programmwunsch der Zentrale mitgeteilt, so sucht die Zentrale einen freien Kanal in der Kanalgruppe KGᵢ, die dem optischen Netzabschluß ONTᵢ, an den der Teilnehmer angeschlossen ist, zugeordnet ist. Ist beispielsweise der Kanal 1 der Kanalgruppe KGᵢ frei, so teilt die Zentrale dem Teilnehmer mit, daß sein Wunschprogramm auf dem Kanal 1 empfangen werden kann gegebenenfalls auch die Uhrzeit, zu dem das Aussenden voraussichtlich beginnt. Diese Mitteilung erfolgt z.B. über das Telefonnetz oder über einen über das Kabelfernseh-Verteilnetz einzurichtenden Signalisierungskanal. Den Schlüssel, den die Zentrale zur Verschlüsselung des zu sendenden Videosignals verwendet, hat der Teilnehmer entweder auf einer Magnetkarte gespeichert oder bekommt ihn ebenfalls von der Zentrale mitgeteilt. Die Zentrale veranlaßt dann das Abspielen des gewünschten Videosignals, falls es in analoger Form vorliegt, die Analog-Digital-Wandlung und Kompression und in jedem Fall die Verschlüsselung mit dem teilnehmerindividuellen Schlüssel. Das zu sendende Videosignal gelangt über die Vermittlungseinrichtung der Zentrale dann auf den freien Kanal 1 der Kanalgruppe KGᵢ. Damit ist sichergestellt, daß das Videosignal den Teilnehmer erreicht, der es bestellt hat.

Es sei noch erwähnt, daß die Erfindung nicht auf die Übertragung von Videosignalen beschränkt ist. Selbstverständlich können auch andere Arten von Signalen, z.B. Audiosignale, auf Abruf zu Teilnehmern übertragen werden, wenn z.B. ein Teilnehmer eine bestimmte Tonaufnahme (z.B. Musik, Vorlesung, Vortrag) hören will.

Auch diese Übertragung geschieht dann wie für Videosignale beschrieben in digitalisierter Form, der Teilnehmer benötigt einen Audio-Decodierer, in den wie oben für Video-Decodierer beschrieben, der Schlüssel für die Entschlüsselung eingebbar ist. Verschiedene Audiosignale können im Zeitmultiplex zusammengefaßt einen einzigen Videokanal (z.B. mit 6Mbit/s) belegen und sich einen einzigen Modulator teilen.

Abschließend sei noch erwähnt, daß die Einrichtungen, die erforderlich sind, um für die Zentrale das die Gesamtheit aller digitalen Videosignale enthaltende Zeitmultiplexsignal ZM zu bilden, nicht notwendigerweise örtlich bei der Zentrale angeordnet sein müssen. Sie können auch örtlich von der Zentrale abgesetzt sein, sogar viele Kilometer, so daß die von der Zentrale aus zu übertragenden Videosignale von den genannten Einrichtungen über eine Zubringer-Übertragungsstrecke zu der Zentrale übertragen werden.

## Patentansprüche

1. Kabelfernseh-Verteilnetz
- mit einem von einer Zentrale (100) zu optischen Netzabschlüssen (ONTᵢ) führenden Lichtwellenleiter-Verteilnetz (101 bis 107),
- mit jeweils einem von einem optischen Netzabschluß (ONTᵢ) zu einer Gruppe von Teilnehmern (110) führenden elektrischen Anschlußnetz zum Verteilen eines Kabelfernseh-Signalgemisches bis zu den Teilnehmern,
- mit Einrichtungen (120 bis 125) in der Zentrale (100), um zusätzlich zu Kabelfernseh-Signalen (KTV) teilnehmerindividuelle Videosignale im Wellenlängenmultiplex mit dem Kabelfernseh-Signalgemisch zu den optischen Netzabschlüssen (ONTᵢ) zu übertragen, **dadurch gekennzeichnet**, daß zu der Zentrale (100) Einrichtungen (123 bis 126) gehören, um die zu übertragenden teilnehmerindividuellen Videosignale als digitale Signale bereitzustellen und die Gesamtheit von digitalen teilnehmerindividuellen Videosignalen, die für an die optischen Netzabschlüsse (ONTᵢ) angeschlossenen Teilnehmer bestimmt sind, zu einem Zeitmultiplexsignal (ZM) zusammenzufassen und dieses im Wellenlängenmultiplex mit dem Kabelfernseh-Signalgemisch optisch zu den optischen Netzabschlüssen (ONTᵢ) zu verteilen wobei für das Kabelfernseh-Signalgemisch und für das Zeitmultiplexsignal verschiedene Wellenlängenverwendet werden, daß bei jedem optischen Netzabschluß (ONTᵢ) Einrichtungen (130 bis 136, M₁ bis M₆) vorhanden sind, um das Zeitmultiplexsignal (ZM) zu empfangen und ihm die für an den optischen Netzabschluß (ONTᵢ) angeschlossene Teilnehmer bestimmten Videosignale (Gᵢ) zu entnehmen und diese entnommenen Videosignale im Frequenzmultiplex dem Kabelfernseh-Signalgemisch hinzuzufügen, die vom optischen Netzabschuß (ONTᵢ) zu den an ihn angeschlossenen Teilnehmern (111) verteilt werden.

2. Kabelfernseh-Verteilnetz nach Anspruch 1,
dadurch gekennzeichnet, daß zu der Zentrale (100) gehören:
- für jeden optischen Netzabschluß (ONTᵢ) ein Kanalmultiplexer (KM₁ bis KM₆₄), der die Videosignale (KGᵢ), die für an den jeweiligen optischen Netzabschluß (ONTᵢ) angeschlossene Teilnehmer (111) bestimmt sind, im Zeitmultiplex zu einem Gruppen-Multiplexsignal (Gᵢ) zusammenfaßt, und
- ein Gruppen-Multiplexer (GM), der die Gruppen-Multiplexsignale (GM₁ bis GM₆₄) zu dem genannten Zeitmultiplexsignal (ZM) zusammenfaßt (Fig. 2).

3. Kabelfernseh-Verteilnetz nach Anspruch 2,
dadurch gekennzeichnet, daß der Gruppen-Multiplexer (GM) die Gruppen-Multiplexsignale (GM₁ bis GM₆₄) bitweise verschachtelt.

4. Kabelfernseh-Verteilnetz nach Anspruch 2,
dadurch gekennzeichnet, daß die bei jedem optischen Netzabschuß (ONTᵢ) vorhandenen Einrichtungen enthalten:
- einen Selektor (133), der die für an den optischen Netzabschluß (ONTᵢ) angeschlossenen Teilnehmer bestimmten Videosignale dem Zeitmultiplexsignal (ZM) als Gruppen-Multiplexsignal (Gᵢ) entnimmt,
- einen Kanal-Demultiplexer (134), der das Gruppen-Multiplexsignal (Gᵢ) in die einzelnen digitalen Videosignale auflöst,
- Modulatoren (M₁ bis M₆), die jeweils ein digitales Videosignal einem Unterträger aufmodulieren und
- Leistungsaddierer (135, 136), die die modulierten Unterträger im Frequenzmultiplex in das Kabelfernseh-Signalgemisch einfügen.

5. Kabelfernseh-Verteilnetz nach Anspruch 4,
dadurch gekennzeichnet, daß die Modulatoren (M₁ bis M₆) das digitale Videosignal jeweils durch Amplitudenumtastung dem Unterträger aufmodulieren und daß die Unterträger in einem Frequenzbereich (VOD, Fig. 3) liegen, der nicht vom Kabelfernseh-Signalgemisch belegt ist.

6. Kabelfernseh-Verteilnetz nach einem der vorstehenden Ansprüche,
dadurch gekennzeichnet, daß es dazu eingerichtet ist, anstelle der teilnehmerindividuellen Videosignale oder zusätzlich zu diesen teilnehmerindividuelle Audiosignale in entsprechender Weise zu übertragen.

7. Kabelfernseh-Verteilnetz nach Anspruch 1 oder 2 dadurch gekennzeichnet, daß die die digitalen Videosignale bereitstellenden Einrichtungen und/oder die das Zeitmultiplexsignal bildenden Einrichtungen (Fig. 2) von der Zentrale örtlich abgesetzt sind.

8. Kabelfernseh-Verteilnetz nach Anspruch 1 oder 2 dadurch gekennzeichnet, daß die die digitalen Videosignale bereitstellenden Einrichtungen und/oder die das Zeitmultiplexsignal bildenden Einrichtungen (Fig. 2) in der Zentrale vorhanden sind.

## Claims

1. A cable television distribution network comprising
- a fiber-optic distribution network (101 to 107) extending from a center (100) to optical network terminations (ONTᵢ),
- a respective electrical access network extending from each of the optical network terminations (ONTᵢ) to a respective one of a plurality of groups of subscribers (111) for distributing a composite cable television signal to the subscribers, and
- means (120 to 125) in the center (100) for transmitting, in addition to cable television signals (KTV), subscriber-assigned video signals together with the composite cable television signal to the optical network terminations (ONTᵢ) using wavelength-division multiplexing,
**characterized in that** the center (100) includes means (123 to 126) for making available the subscriber-assigned video signals as digital signals, for combining the entirety of digital subscriber-assigned video signals intended for subscribers connected to the optical network terminations (ONTᵢ) into a time-division-multiplexed signal (ZM), and for optically distributing the signal (ZM) with the composite cable television signal to the optical network terminations (ONTᵢ) using wavelength-division multiplexing and different wavelengths for the composite cable television signal and the time-division-multiplexed signal, and that each optical network termination (ONTᵢ) includes means (130 to 136, M₁ to M₆) for receiving the time-division-multiplexed signal (ZM), for extracting therefrom the video signals (Gᵢ) intended for subscribers connected to the optical network termination (ONTᵢ), and for frequency-division-multiplexing said extracted video signals with the composite cable television signal which is distributed from the optical network termination (ONT₁) to the subscribers (111) connected to said optical network termination (ONT₁).

2. A cable television distribution network as claimed in claim 1,
characterized in that the center (100) further includes:
- for each optical network termination (ONTᵢ) a channel multiplexer (KM₁ to KM₆₄) which combines the video signals (KGᵢ) intended for subscribers (111) connected to the respective optical network termination (ONTᵢ) into a group multiplex signal (Gᵢ) using time-division multiplexing; and
- a group multiplexer (GM) which combines the group multiplex signals (G₁ to G₆₄) into said time-division-multiplexed signal (ZM) (Fig. 2).

3. A cable television distribution network as claimed in claim 2,
characterized in that in the group multiplexer (GM), the group multiplex signals (G₁ to G₆₄) are bit-interleaved.

4. A cable television distribution network as claimed in claim 2,
characterized in that the means in each optical network termination (ONTᵢ) include:
- a selector (133) which extracts the video signals intended for subscribers connected to the optical network termination (ONTᵢ) as the group multiplex signal (Gᵢ) from the time-division-multiplexed signal (ZM);
- a channel demultiplexer (134) which separates the group multiplex signal (Gᵢ) into the individual digital video signals;
- modulators (M₁ to M₆) which each modulate one of the digital video signals onto a subcarrier; and
- power combiners (135, 136) which combine the modulated subcarriers with the composite cable television signal using frequency-division multiplexing.

5. A cable television distribution network as claimed in claim 4,
characterized in that each of the modulators (M₁ to M₆) modulates the digital video signal onto the subcarrier by amplitude-shift keying, and that the subcarriers lie in a frequency range (VOD, Fig. 3) which is not occupied by the composite cable television signal.

6. A cable television distribution network as claimed in any one of the preceding claims, characterized in that it is designed to transmit audio signals instead of or in addition to the subscriber-assigned video signals in a corresponding manner.

7. A cable television distribution network as claimed in claim 1 or 2, characterized in that the means making available the digital video signals and/or the means (Fig. 2) forming the time-division-multiplexed signal are located remote from the center.

8. A cable television distribution network as claimed in claim 1 or 2, characterized in that the means making available the digital video signals and/or the means (Fig. 2) forming the time-division-multiplexed signal are located in the center.

## Revendications

1. Réseau de distribution de télévision par câble
- avec un réseau de distribution à guide d'ondes (101 à 107) allant d'un centre (100) jusqu'à des terminaux de réseau optique (ONTᵢ), - avec respectivement un réseau de connexion électrique allant d'un terminal de réseau optique (ONTᵢ) à un groupe d'abonnés (110) pour distribuer un mélange de signaux de télévision par câble auprès des abonnés,
- avec des dispositifs (120 à 125) dans le centre (100) pour transmettre en plus des signaux de télévision par câble (KTV) des signaux vidéo spécifiques aux abonnés par multiplexage en longueur d'onde avec l'ensemble composite de signaux de télévision par câble jusqu'aux terminaux de réseau optique (ONTᵢ),
caractérisé en ce que le centre (100) comporte des dispositifs (123 à 126) pour mettre à disposition les signaux vidéo spécifiques aux abonnés comme des signaux numériques et pour regrouper l'ensemble de signaux vidéo numériques, spécifiques aux abonnés, qui sont destinés aux abonnés connectés aux terminaux de réseau optique (ONTᵢ), dans un signal multiplexé dans le temps (ZM) et pour le distribuer de façon optique par multiplexage en longueur d'onde avec l'ensemble composite de signaux de télévision par câble aux terminaux de réseau optique (ONTᵢ), différentes longueurs d'onde étant utilisées pour l'ensemble composite de signaux de télévision par câble et pour le signal multiplexé dans le temps, en ce qu'à chaque terminal de réseau optique (ONTᵢ) il existe des dispositifs (130 à 136, M₁ à M₆) pour recevoir le signal multiplexé dans le temps (ZM) et en extraire les signaux vidéo (Gᵢ) destinés à des abonnés connectés au terminal de réseau optique (ONTᵢ) et pour ajouter ces signaux vidéo extraits par multiplexage en fréquence au mélange de signaux de télévision par câble qui sont distribués du terminal de réseau optique (ONTᵢ) aux abonnés (111) qui y sont connectés.

2. Réseau de distribution de télévision par câble selon la revendication 1, caractérisé en ce que le centre (100) comprend :
- pour chaque terminal de réseau optique (ONTᵢ) un multiplexeur de canal (KM₁ à KM₆₄) qui regroupe les signaux vidéo (KGᵢ) qui sont destinés à des abonnés (111) connectés au terminal de réseau optique (ONTᵢ) respectif, par multiplexage dans le temps en un signal de multiplexage de groupe (Gᵢ), et
- un multiplexeur de groupe (GM) qui regroupe les signaux de multiplexage de groupe (GM₁ à GM₆₄) dans ledit signal multiplexé dans le temps (ZM) (figure 2).

3. Réseau de distribution de télévision par câble selon la revendication 2, caractérisé en ce que le multiplexeur de groupe (GM) entrelace les signaux de multiplexage de groupe (GM₁ à GM₆₄) de façon binaire.

4. Réseau de distribution de télévision par câble selon la revendication 2, caractérisé en ce que les dispositifs existant à chaque terminal de réseau optique (ONTᵢ) comprennent :
- un sélecteur (133) qui extrait les signaux vidéo, destinés à des abonnés connectés au terminal de réseau optique (ONTᵢ), du signal multiplexé dans le temps (ZM) comme un signal de multiplexage de groupe (Gᵢ),
- un démultiplexeur de canal (134) qui décompose le signal de multiplexage de groupe (Gᵢ) en signaux vidéo numériques individuels,
- des modulateurs (M₁ à M₆) qui modulent respectivement un signal vidéo sur une sous-porteuse, et
- des additionneurs de puissance (135, 136) qui insèrent les sous-porteuses modulées par multiplexage en fréquence dans l'ensemble composite de signaux de télévision par câble.

5. Réseau de distribution de télévision par câble selon la revendication 4, caractérisé en ce que les modulateurs (M₁ à M₆) modulent le signal vidéo numérique respectivement par une modulation d'amplitude sur la sous-porteuse et en ce que les sous-porteuses se trouvent dans un domaine de fréquences (VOD, figure 3) qui n'est pas occupé par l'ensemble composite de signaux de télévision par câble.

6. Réseau de distribution de télévision par câble selon l'une quelconque des revendications précédentes, caractérisé en ce qu'il est configuré pour transmettre de façon analogue des signaux audio spécifiques aux abonnés au lieu des signaux vidéo spécifiques aux abonnés ou en plus de ceux-ci.

7. Réseau de distribution de télévision par câble selon la revendication 1 ou 2, caractérisé en ce que les dispositifs mettant à disposition les signaux vidéo numériques et/ou les dispositifs (figure 2) formant le signal multiplexé dans le temps sont localisés à distance du centre.

8. Réseau de distribution de télévision par câble selon la revendication 1 ou 2, caractérisé en ce que les dispositifs mettant à disposition les signaux vidéo numériques et/ou les dispositifs (figure 2) formant le signal multiplexé dans le temps sont présents dans le centre.
